# EUROPEAN PATENT APPLICATION

(11) **EP 3 367 325 A1**
(43) Date of publication of application: **29.08.2018**
(21) Application number: 16857794.8
(22) Date of filing: 20.10.2016
(51) Int. Cl.: G06Q 50/34, G06Q 30/02, G06Q 30/06, H04W 4/12, H04W 4/02, H04L 12/58

(54) **PRICE EVENT PROCESSING APPARATUS, AND SYSTEM AND METHOD THEREFOR**

(30) Priority: 21.10.2015 KR 20150146968; 09.12.2015 KR 20150174917
(71) Applicant: Nam, Ki-won, Seoul 06159 (KR)
(72) Inventor: Nam, Ki-won, Seoul 06159 (KR)
(74) Representative: Lambacher, Michael
(86) International application number: PCT/KR2016/011836
(87) International publication number: WO 2017/069536

(57) **Abstract**

The present invention relates to an apparatus, a system, and a method for processing a price event. The purpose of the present invention is to provide an apparatus, a system, and a method for processing a price event, in which the price event that produces a plurality of prize winners is performed while using, as a financial resource of the event, promotion expenses that are differentially provided by each affiliate when an order is placed for a specific product or service, and a user is allowed to receive prize-winning probability information of the corresponding user by determining an amount of participation money and an expected amount of prize money, thus to select or change processing of the event so that the user may feel a noticeable effect of a discount in real time. When an order is placed for the specific product or service, an event operation server randomly extracts any one of preregistered fixed probabilities or a plurality of probabilities, and transmits the extracted probability to the user, so as to allow the user to select a final probability, thereby generating a probability group, and performs prize-winning processing so that the user may feel a noticeable effect of a discount in real time.

## Description

### [Technical Field]

The present invention relates to an apparatus, a system, and a method for processing a price event, and more particularly, to an apparatus, a system, and a method for processing a price event, in which the price event that produces a plurality of prize winners is performed while using, as a financial resource of the event, promotion expenses that are differentially provided by each affiliate when an order is placed for a specific product or service, and a user is allowed to receive prize-winning probability information of the corresponding user by determining an amount of participation money and an expected amount of prize money, thus to select or change processing of the event so that the user may feel a noticeable effect of a discount in real time.

### [Background Art]

As is well known, in recent years, competition between sellers is becoming fierce. In such a competitive environment, commercial marketing for selling more products than other sellers has been actively proceeded, and an apparatus for offering various benefits to a person who made a payment in cash and a person who made a credit payment not only online but also offline has been developed to induce a desire to purchase the product, thereby inducing consumption.

In order to secure transparency in sources of taxation and prevent an omission of tax by actively utilizing a credit payment method using a credit card, currently, at the instigation of the government, a lottery method of drawing a prize winner from card users who made a payment of a predetermined amount of money or more by a credit card in a predetermined period unit and providing a predetermined amount of prize money to the prize winner, has been developed and applied.

In a case of the lottery method through the credit card, when credit card users distributed across the country make a payment for a specific product or service using a card thereof, the card payment is given a serial number in a sequence of payment and the serial number is chosen by lottery every predetermined cycle (e.g., every weekly unit), such that a predetermined amount of prize money is provided for a credit card by which a card payment with the winning serial number is made.

However, in the conventional lottery method using a credit card, since drawing of a prize-winning number from serial numbers given for each card payment can be conducted only after a predetermined period (for example, a week unit) from a credit card payment date, as for users using the credit card, they need to confirm whether they won or not on time for the drawing, which is cumbersome, and it is not possible to immediately check whether they won or not at the time of making the card payment. Thus, it is difficult to raise expectations of the users and induce a desire to make a purchase by a card payment.

Meanwhile, card affiliates induce more sales than non-affiliates while further raising purchasing desire of purchasers through a maximum accumulated money upon use of card or an appreciation event. However, in a current affiliate system, various events such as payment lottery, and the like may not be held for each affiliate.

Further, in a discount system based on a sequence number of payment, like a 100^{th} customer is designated as a prize winner in advance when 100 customers make a payment, a sequence number of payment of each customer is checked in a state in which a specific winning sequence number is designated by a computer in advance. Therefore, a customer may not select a prize-winning probability.

In addition, if distribution companies or selling companies such as departments or large retailers intend to hold an event for a specific product, they increase a sales rate of the product by making consumers to pay attention to the product only through discounting. Such a product is named a loss leader, and contributes to encouraging visit desires of the consumers.

As a result, the distribution companies or selling companies such as departments or large retailers provide the consumers with simple discount events for a specific product. However, since all distribution companies or selling companies conduct the event as described above, and a large amount of discount may not be offered to every customer purchasing the product, the consumers do not feel special attractiveness about the discount events, which has a limit in promoting consumption.

In particular, as for the consumers, it may be effective for promoting consumption to provide information on whether they won or not by conducting a discount event in real time before making a payment for the product, and apply an amount of discount to the payment, thus to determine a final amount of payment. However, such a technology currently does not exist.

Further, as for the card companies, there is a need to collect big data of users to conduct various marketing such as target marketing or credit card marketing, and promotion events. However, there is actually no way the card companies may collect information on a purchased product without causing resistance of users. In particular, since a conventional card payment terminal only provides information on a total amount of payment from the affiliate to the card company, the card company cannot obtain detailed information on the purchased product.

### [Disclosure]

### [Technical Problem]

In consideration of the above-mentioned circumstances, it is an object of the present invention to provide an apparatus, a system, and a method for processing a price event, in which the price event that produces a plurality of prize winners is performed while using, as a financial resource of the event, promotion expenses that are differentially provided by each affiliate when an order is placed for a specific product or service, and a user is allowed to receive prize-winning probability information of the corresponding user by determining an amount of participation money and an expected amount of prize money, thus to select or change processing of the event so that the user may feel a noticeable effect of a discount in real time.

Another object of the present invention to provide an apparatus, a system, and a method for processing a price event, in which when an order is placed for the specific product or service, an event operation server randomly extracts any one of preregistered fixed probabilities or a plurality of probabilities, and transmits the extracted probability to the user, so as to allow the user to select a final probability, thereby generating a probability group, and performs prize-winning processing so that the user may feel a noticeable effect of a discount in real time.

### [Technical Solution]

In order to achieve the above-described object, according to an aspect of the present invention, there is provided a method for processing a price event, including: a) receiving, by a price event processing server 60, a specific affiliate selection signal from a user terminal 2; b) receiving, by the price event processing server 60, a selection signal for purchase of a specific product sold at the affiliate from the user terminal 2; c) receiving, by the price event processing server 60, a selection signal for expected prize money amount information or desired prize-winning probability information from the user terminal 2; d) performing, by the price event processing server 60, event prize-winning processing; and e) transmitting, by the price event processing server 60, prize-winning information and prize money amount information to the user terminal 2.

Preferably, the method further includes: before the a) receiving, receiving and registering, by the price event processing server 60, a unique number or a name of the affiliate, product or service information, price information for each product or service, and information on an affiliate-specific support amount (or support discount rate) from the affiliate.

Preferably, the method further includes: before the a) receiving, extracting, by the price event processing server 60, information on an affiliate located within a certain radius around a user according to user location information and affiliate request information transmitted from the user terminal 2 and providing the extracted information to the user terminal 2.

Preferably, the method further includes: before the a) receiving, giving and registering, by the price event processing server 60, different discount rates for each product or service.

Preferably, the method further includes: in the c) receiving, calculating and providing, by the price event processing server 60, a prize-winning probability of a user when receiving the expected prize money amount information from the user terminal 2.

Preferably, the method further includes: in the c) receiving, receiving, by the price event processing server 60, event participation amount-changed information for a fixed event participation amount from the user terminal 2 to perform calculation so as to increase or decrease the prize-winning probability.

Preferably, the method further includes: in the d) performing, performing, by the price event processing server 60, event processing by automatically subtracting an amount as much as a participation amount from an accumulated money of an account of a user when receiving a pre-payment event preprocessing request signal from the user terminal 2.

Preferably, the method further includes: in the d) performing, first performing, by the price event processing server 60, event processing when receiving a pre-payment event preprocessing request signal, and then performing automatic payment of only an event participation amount when payment for the product is not made later.

Preferably, the method further includes: in the d) performing, creating, by the price event processing server 60, a price group of affiliates that provide the same promotion discount rate, wherein the price group provides the same support amount calculated by multiplying the promotion discount rate by a payment amount; creating a group of users who select the same specific prize-winning probability in the price group; randomly determining, by the price event processing server 60, a prize-winning number and generating a random number for a user in a state in which the number of prize-winners in a prize-winning probability group is constantly fixed; and comparing, by the price event processing server 60, the number given to the user and the prize-winning number to determine whether the user won or not.

Preferably, the price event processing server 60 calculates the prize-winning probability as (event participation amount of user)/(expected amount of prize money selected by user).

Preferably, in the d) performing, the price event processing server 60 performs the prize-winning processing that "(sum of all promotion expenses of affiliate) × (probability provided to user) = amount of prize money" by automatically randomly extracting any one probability of a plurality of probabilities registered so that a sum of all the probabilities is 1, and providing the extracted probability to the user.

Preferably, in the d) performing, after a first participation amount is paid, when a user requests an additional probability in addition to the probability provided thereto, the price event processing server 60 performs the prize-winning processing by receiving payment of an additional participation amount and applying the additional participation amount to the probability selected by the user among a plurality of probabilities.

Preferably, in the d) performing, the price event processing server 60 receives payment of a participation amount of each round from the same user, generates different probabilities resulting from a sequential request for an additional probability, and then applies the participation amounts in a lump with respect to any one probability selected by the user.

Preferably, in the d) performing, the price event processing server 60 randomly extracts and provides a plurality of probabilities by receiving a request for provision of a plurality of probabilities from a user, and performs the prize-winning processing with respect to any one probability selected by the user among the plurality of probabilities.

Preferably, the method further includes: in the d) performing, performing, by the price event processing server 60, update so that (sum of all promotion expenses of affiliate) is changed every time an amount of prize money of a user is provided.

Preferably, the method further includes: after the e) transmitting, relaying, by the price event processing server 60, a payment signal generated in the user terminal 2 to a payment server 82 and relaying payment information to the user terminal 2; generating a payment authentication number when the payment is completed by the user; and transmitting the payment authentication number to the user terminal 2 and an affiliate terminal 80 to allow the affiliate so as to confirm which user makes the payment and for which product the payment is made.

Preferably, the method further includes, after the e) transmitting, collecting, by the price event processing server 60, user information and information on a product purchased by the user, and colleting product-specific promotion discount rate information together.

According to another aspect of the present invention, there is provided a system for processing a price event, including: a user terminal 2 provided with a my-price event application 4 configured to generate a pre-payment event preprocessing request signal to a price event processing server 60 by receiving affiliate-specific support amount information, selecting and inputting a product of any one affiliate, and inputting event participation amount and expected prize money amount information, generate a final event prize-winning processing request signal by receiving prize-winning probability information, receive prize-winning result information and information on a final amount of payment and output the received information on a screen, generate a final payment request signal, and receive and output a result of the final payment request; an affiliate terminal 80 configured to register affiliate information and support amount (or discount rate) information in the price event processing server 60 and receive and output payment information of a user; and the price event processing server 60 configured to receive and register product information, price information, and event support amount information of the selected affiliate from the affiliate terminal 80, receive an event-related processing request signal including the participation amount and expected prize money amount information from the user terminal 2 to calculate a prize-winning probability, provide the calculated prize-winning probability to the user terminal 2, and when the prize-winning probability is finally selected, perform event processing to determine whether the user won or not in real time.

Preferably, the price event processing server 60 receives and registers a unique number or a name of the affiliate, product or service information, price information for each product or service, and information on an affiliate-specific support amount (or support discount rate) from the affiliate.

Preferably, the my-price event application 4 is configured to automatically request information on an affiliate within a certain radius to the price event processing server 60 at the time of operation.

Preferably, the price event processing server 60 is configured to perform event processing by automatically subtracting an amount as much as the participation amount from an accumulated money of an account of the user when the pre-payment event preprocessing request signal is received.

Preferably, the price event processing server 60 is configured to perform event processing first when receiving the pre-payment event preprocessing request signal, process an account of the user to be in a negative accumulated money amount state when payment for the product is not made later, and limit event participation if the account of the user is in the negative accumulated money amount state later.

Preferably, the price event processing server 60 is configured to first perform event processing when receiving the pre-payment event preprocessing request signal, and then perform automatic payment of only the event participation amount when payment for the product is not made later.

Preferably, the price event processing server 60 is configured to perform calculation using an expected amount of prize money and a participation amount input by the user so that the prize-winning probability is (participation amount)/(expected amount of prize money).

Preferably, the participation amount is an event participation amount, and is at least a support amount provided by an affiliate at which payment for a product is made, or an amount obtained by adding an additional participation amount of the user to the support amount of the affiliate.

Preferably, the price event processing server 60 is a server configured to perform processing so that an event is conducted by grouping affiliates that provide the same support amount into the same price group so as to perform the same event, or grouping affiliates that provide the same final promotion expense reflecting a payment amount and a discount rate of each affiliate into the same price group.

Preferably, the price event processing server 60 is a server configured to perform processing so that users who purchase a product at affiliates classified as the same price group and directly selecting the same prize-winning probability are secondarily grouped to perform prize-winning processing randomly according to the probability.

Preferably, the my-price event application 4 is configured to automatically request access to information on an affiliate located within a certain radius around the user when an operating signal is generated at a specific point, and transmit location information of the user to the price event processing server 60.

Preferably, the price event processing server 60 is configured to relay product payment information of the user, and when the payment is completed, transmit the same authentication code which is payment confirmation information to the affiliate terminal 80 and the user terminal 2, respectively.

Preferably, when receiving product payment information of the user, the price event processing server 60 receives a table number of the affiliate or a product number, together.

Preferably, the price event processing server 60 performs prize-winning processing by classifying users as a group of probability that the user selects, giving the user a randomly generated number, predetermining the number of prize-winners according to the probability, and comparing the number given to the user with a pre-registered prize-winning number to determine whether the user won or not.

Preferably, the price event processing server 60 performs processing that an actual probability of each point in time is processed according to a mathematical combination method so that a prize-winning probability of another user of a previous point in time affects a prize-winning probability of a user of a later point in time by a processing method of classifying users as a probability group selected by the user and performing prize-winning processing in real time.

Preferably, the price event processing server 60 automatically randomly extracts any one probability of a plurality of probabilities registered so that a sum of all the probabilities is 1, and provides the extracted probability to the user to calculate an amount of prize money of the user through prize-winning processing that "(sum of all promotion expenses of affiliate) × (probability provided to user) = amount of prize money".

Preferably, the participation amount of the user may be a fixed amount according to a promotion event of the affiliate or a variable amount when a user adds up an additional accumulated money of the user to promotion expenses.

Preferably, after a first participation amount is paid, when the user requests an additional probability in addition to the probability provided thereto, the price event processing server 60 performs prize-winning processing by receiving payment of an additional participation amount and applying the additional participation amount to the probability selected by the user among the plurality of probabilities.

Preferably, the price event processing server 60 receives payment of a participation amount of each round from the same user, generates different probabilities resulting from a sequential request for an additional probability, and then applies the participation amounts in a lump with respect to any one probability selected by the user.

Preferably, the price event processing server 60 randomly extracts and provides a plurality of probabilities by receiving a request for provision of a plurality of probabilities from the user, and performs prize-winning processing with respect to any one probability selected by the user among the plurality of probabilities.

Preferably, the (sum of all promotion expenses of affiliate) is calculated by the price event processing server 60 so that the (sum of all promotion expenses of affiliate) is changed every time the prize money of the user is provided.

Preferably, the price event processing server 60 includes: a communication module 62 configured to perform communication with the affiliate terminal 80 and the user terminal 2; an affiliate information registration unit 64 configured to register location information and product (or service) information of the affiliate; an affiliate-specific support amount registration unit 66 configured to register information on a promotion discount rate (or discount amount) of each affiliate to be provided to the user; an affiliate information extractor 68 configured to extract affiliate information by a specific affiliate selection signal provided from the user terminal 2; a price event processor 72 configured to perform processing for whether the user won or not and for an amount of prize money by forming a price group through affiliate classification or product classification and applying a prize-winning probability selected by the user; and a controller 78 configured to control so that affiliate-specific or product-specific promotion discount rate information is registered, respectively, and a sum of the promotion discount rates is used as a financial resource, and the user selects a predetermined prize-winning probability in real time for processing whether the user won or not.

Preferably, the price event processing server 60 includes: a temporary payment processor 70 configured to perform preprocessing of payment so that a promotion support amount is obtained before actual payment.

Preferably, the price event processing server 60 further includes: a payment relay unit 74 configured to relay a payment signal generated in the user terminal 2 to a payment server 82 and relay payment information to the user terminal 2; and a payment authentication number generator 76 configured to generate and transmit a payment authentication number to the user terminal 2 and the affiliate terminal 80 when the payment is completed by the user to allow the affiliate so as to confirm which user makes the payment and for which product the payment is made.

Preferably, the price event processing server 60 performs processing so that different promotion support amounts are provided for different products of the same affiliate.

Preferably, the price event processing server 60 receives information on selection of a product or service to be purchased, determines how much promotion discount rate is matched to the product or service, and collects and stores information on the sale of the product or service.

Preferably, a product information input unit 44 includes a function of performing an input of an ordered menu and a table number.

Preferably, the price event processor 72 includes: a price group classification processor 84 configured to primarily classify affiliates that provide the same promotion discount rate as a group; an expected discount rate group classification processor 86 configured to secondarily classify users who select the same prize-winning probability as a group; a probability generator 88 configured to calculate and generate a prize-winning probability according to an expected discount rate of the user; a prize-wining processor 92 configured to perform prize-winning processing of the user and calculating an amount of prize money; and a payment amount recalculator 94 configured to recalculate a final payment amount by subtracting the amount of prize money from a payment amount of the user.

Preferably, the price event processor 72 includes a random number generator 90 configured to generate a random number to confirm whether the user won or not when the server randomly extracts and registers a prize-winning number for a preset number of prize-winners, and an event participation signal of the user is generated.

Meanwhile, according to another aspect of the present invention, there is provided an apparatus for processing a price event including: with respect to a price event processing server 60 configured to perform processing for prize-winning of a discount event by receiving affiliate-specific support amount information or promotion discount rate and selecting and inputting a product of any one affiliate, an affiliate information request signal generator 38 configured to automatically generate an affiliate information request signal when an application operating signal is generated; an affiliate information receiver 40 configured to receive information on a plurality of affiliates from the price event processing server 60; an affiliate selection unit 42 configured to select and input any one affiliate of the plurality of affiliates; a product information input unit 44 configured to input a purchase signal for a product sold in the affiliate; an expected discount rate selection unit 48 configured to input an expected discount rate desired to be provided for the product; an information display unit 50 configured to display information received from the price event processing server 60 on a screen; and a controller 56 configured to control so as to conduct a prize-winning event for a discount rate selected by a user through the price event processing server 60 at the time of payment for a specific product at a specific affiliate by interworking with the price event processing server 60, and output information on the prize-winning event.

Preferably, the apparatus further includes a GPS module 46 configured to automatically extract and transmit location information of the user to request information on an affiliate located within a certain radius around the user.

Preferably, the apparatus further includes: a payment signal generator 52 configured to generate a payment signal for a price of the product to be purchased; and a payment authentication number receiver 54 configured to receive a payment authentication number provided from the price event processing server 60 and presented to the affiliate.

Preferably, the payment signal generator 52 is configured to automatically transmit a payment completion signal to the price event processing server 60 when receiving a payment signal from a payment server 82.

### [Advantageous Effects]

The apparatus, the system, and the method for processing a price event according to the present invention allow a user to select one of affiliates offering different promotion discount rates, further allow the user to directly select an expected prize-winning probability or an expected amount of prize money desired by the user, and process a prize-winning, such that it is possible to increase expectation for winning of a large amount of prize money. Alternatively, it is possible to allow the user to select a higher prize-winning probability according to personal taste of the user to increase expectation for a prize-winning, thereby promoting vitalization of consumption.

### [Description of Drawings]

FIG. 1 is a diagram illustrating a schematic configuration of a system for processing a price event according to one embodiment of the present invention;
FIG. 2 is a diagram illustrating a prize-winning processing structure through the system for processing a price event according to one embodiment of the present invention;
FIG. 3 is a diagram illustrating a prize-winning processing state through the system for processing a price event according to one embodiment of the present invention;
FIG. 4 is a diagram illustrating a state of recognizing and selecting an affiliate through the system for processing a price event according to one embodiment of the present invention;
FIG. 5 is a diagram illustrating a main screen of an application output through an apparatus for processing a price event according to one embodiment of the present invention;
FIG. 6 is a block diagram illustrating a configuration of a my-price event application installed in the apparatus for processing a price event according to one embodiment of the present invention;
FIG. 7 is a block diagram illustrating a configuration of a price event processing server included in the system for processing a price event according to one embodiment of the present invention;
FIG. 8 is a diagram illustrating a detailed configuration of a price event processor included in the apparatus for processing a price event according to one embodiment of the present invention;
FIG. 9 is a diagram illustrating a state of performing prize-winning processing in an automatic random manner through a system for processing a price event according to another embodiment of the present invention;
FIG. 10 is a diagram illustrating a detailed configuration of the price event processor of FIG. 9;
FIG. 11 is a diagram illustrating a prize-winning processing state according to a sequential request for an additional probability after payment of a participation amount once through the system for processing a price event according to another embodiment of the present invention;
FIG. 12 is a diagram illustrating payment of a participation amount of each round and a state of applying participation amounts in a lump due to a sequential request for an additional probability through the system for processing a price event according to another embodiment of the present invention;
FIG. 13 is a diagram illustrating that a plurality of probabilities are requested, any one desired probability is selected and applied through the system for processing a price event according to another embodiment of the present invention;
FIG. 14 is a diagram illustrating a configuration of mixed probability type processing through the system for processing a price event according to another embodiment of the present invention; and
FIG. 15 is a diagram illustrating a mixed probability type processing state through the system for processing a price event according to another embodiment of the present invention.

### [Best Mode]

Hereinafter, the present invention will be described in detail with reference to the accompanying drawings.

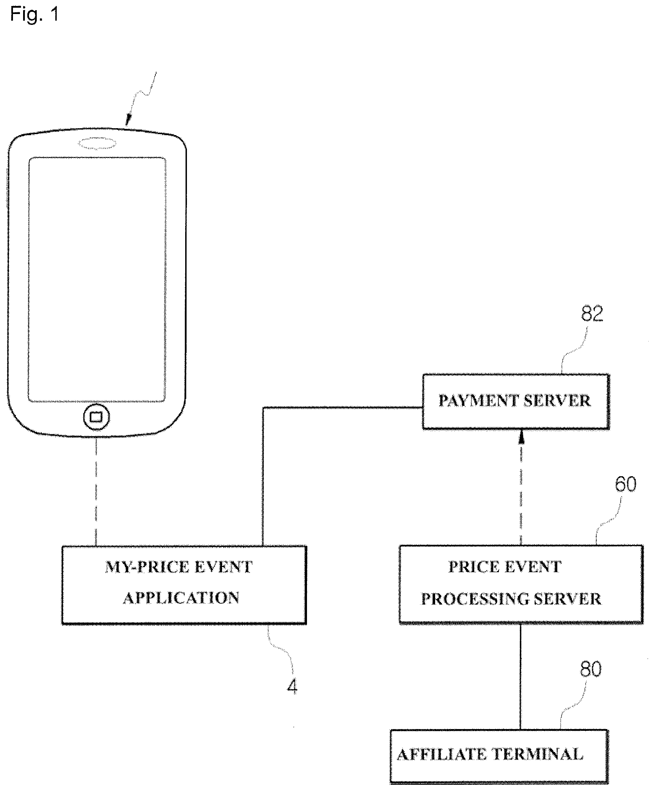

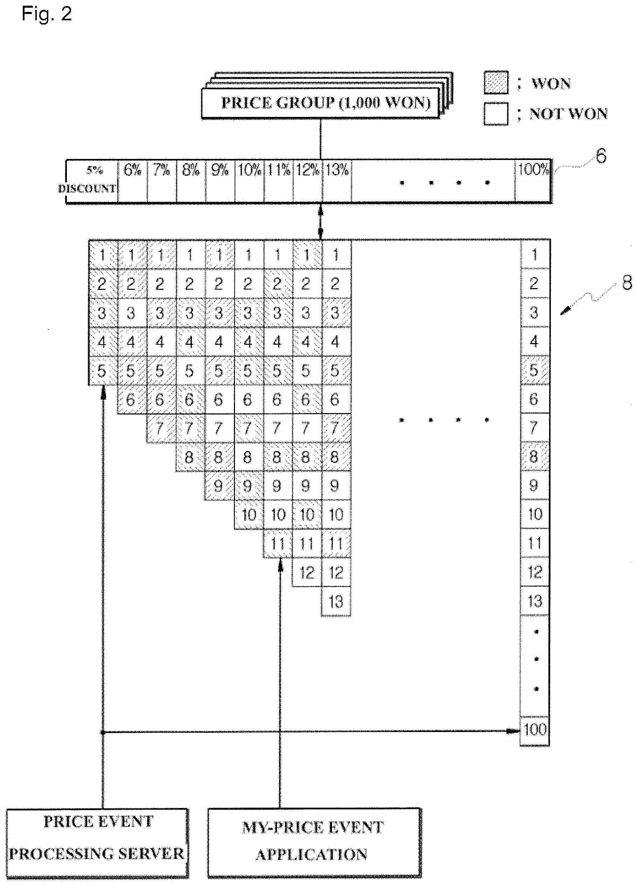

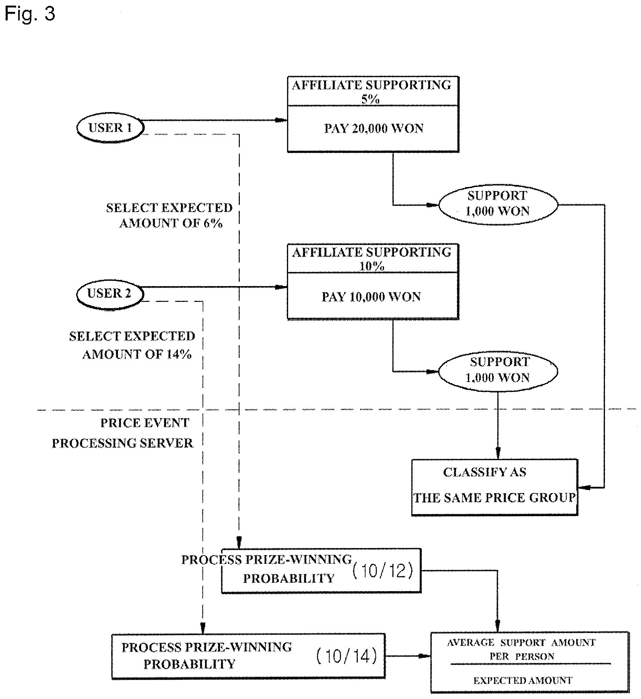

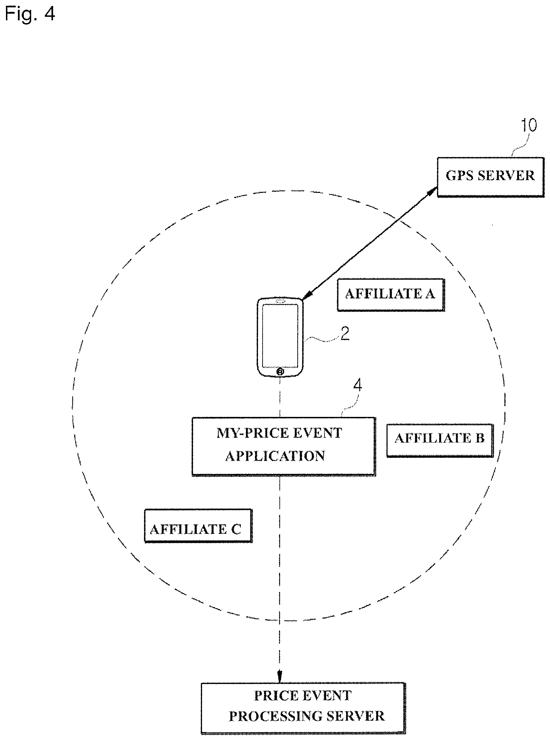

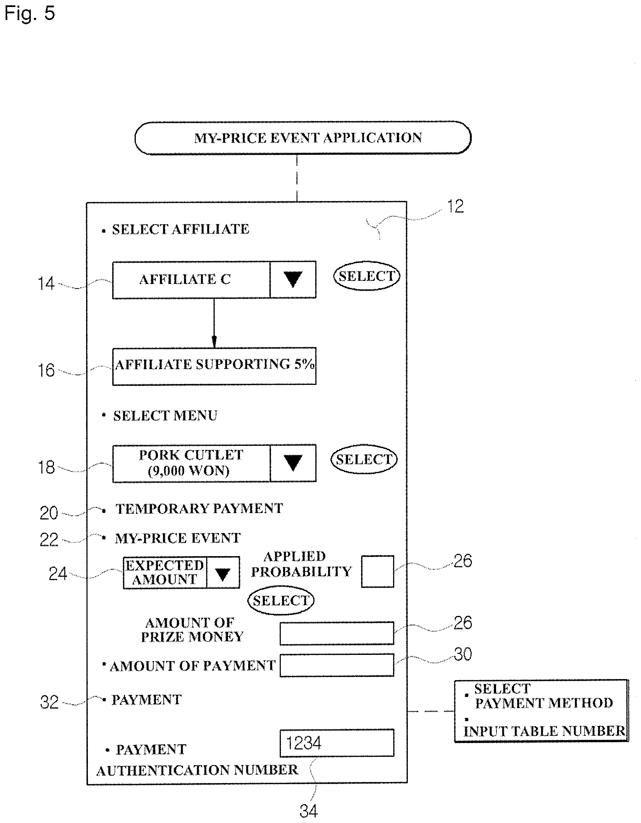

FIG. 1 is a diagram illustrating a schematic configuration of a system for processing a price event according to one embodiment of the present invention, FIG. 2 is a diagram illustrating a prize-winning processing structure through the system for processing a price event according to one embodiment of the present invention, FIG. 3 is a diagram illustrating a prize-winning processing state through the system for processing a price event according to one embodiment of the present invention, FIG. 4 is a diagram illustrating a state of recognizing and selecting an affiliate through the system for processing a price event according to one embodiment of the present invention, and FIG. 5 is a diagram illustrating a main screen of an application output through an apparatus for processing a price event according to one embodiment of the present invention.

Referring to FIGS. 1 to 5, the system for processing a price event according to one embodiment of the present invention is a system in which the price event that produces a plurality of prize winners is performed while using, as a financial resource of the event, promotion expenses that are differentially provided by each affiliate when an order is placed for a specific product or service, and a user is allowed to receive prize-winning probability information of the corresponding user by determining an amount of participation money and an expected amount of prize money, thus to select or change processing of the event so that the user may feel a noticeable effect of a discount in real time.

More specifically, the system for processing a price event according to one embodiment of the present invention is a system that allows a user to select one of affiliates offering different promotion discount rates, further allows the user to directly select an expected prize-winning probability or an expected amount of prize money desired by the user, and processes a prize-winning, such that it is possible to increase expectation for winning of a large amount of prize money. Alternatively, it is possible to allow the user to select a higher prize-winning probability according to personal taste of the user to increase expectation for a prize-winning, thereby promoting vitalization of consumption.

To this end, the system for processing a price event according to one embodiment of the present invention includes a user terminal 2 provided with a my-price event application 4 configured to generate a pre-payment event preprocessing request signal to a price event processing server 60 by receiving affiliate-specific support amount information, selecting and inputting a product of any one affiliate, and inputting event participation amount and expected prize money amount information, generate a final event prize-winning processing request signal by receiving prize-winning probability information, receive prize-winning result information and information on a final amount of payment and output the received information on a screen, generate a final payment request signal, and receive and output a result of the final payment request; and an affiliate terminal 80 configured to register affiliate information and support amount (or discount rate) information in the price event processing server 60 and receive and output payment information of a user.

Further, the system for processing a price event according to one embodiment of the present invention may include the price event processing server 60 configured to receive and register product information, price information, and event support amount information of the selected affiliate from the affiliate terminal 80, receive an event-related processing request signal including the participation amount and the expected prize money amount information from the user terminal 2 to calculate a prize-winning probability, provide the calculated prize-winning probability to the user terminal 2, and when the prize-winning probability is finally selected, perform event processing to determine whether the user won or not in real time.

At this time, the price event processing server 60 receives and registers a unique number or a name of the affiliate, product or service information, price information for each product or service, and information on an affiliate-specific support amount (or support discount rate) from the affiliate.

Therefore, the user may search about which affiliate provides a promotion discount rate and what percentage of the promotion discount rate is provided by operating the my-price event application 4 installed in the user terminal 2. As a result, the user may expect to win a larger amount of prize money when purchasing a product at an affiliate providing a higher promotion discount rate.

When the user moves offline in person, even in the case of wanting to visit an offline affiliate such as a restaurant, the user may efficiently receive affiliate information through the my-price event application 4.

To this end, the my-price event application 4 automatically requests information on an affiliate within a certain radius to the price event processing server 60 at the time of operation. Location information of the user is automatically provided to the price event processing server 60 through global positioning system (GPS), and the price event processing server 60 extracts and provides the information on the affiliate located near the user.

Meanwhile, even though the affiliate secures the promotion discount rate provided to the price event processing server 60 as a financial resource for a prize-winning, in order to make the user not to hesitate to purchase the product, a certain percentage of a price of each product is paid as a prize-winning event participation amount, and the participation amount is provided in a form of a coupon usable as cash in future.

For example, when the user purchases a certain product of which a price is 20,000 won at an affiliate providing a promotion discount rate of 5%, 5% of the price becomes a participation amount of the prize-winning event.

Accordingly, when the user pays 1,000 won to the price event processing server 60, the user may participate in the prize-winning event, and when payment for the product is completed later, a 1,000 won coupon is provided to the user regardless of whether the user won or not.

Preferably, in the system for processing a price event according to one embodiment of the present invention, the user may directly pay the participation amount of the prize-winning event, but the participation money may be automatically subtracted from an accumulated money already accumulated in a user's account. Further, since more consumption may be promoted when the prize-winning event is processed before payment for a specific product or service to reduce an amount of payment, in the present invention, the prize-winning event is pre-processed.

More preferably, the price event processing server 60 may also be configured to perform event processing first when receiving the pre-payment event preprocessing request signal, process the account of the user to be in a negative accumulated money amount state when payment for the product is not made later, and limit the event participation if the account of the user is in the negative accumulated money amount state later.

That is, in the system for processing a price event according to one embodiment of the present invention, even when there is no accumulated money in the account of the user, the prize-winning event may be conducted first, and then if the payment for the product is not made later, the account of the user may be processed to be in a negative accumulated money amount state. However, when the user wants to participate in the prize-winning event later, if the account of the user is continuously in the negative accumulated money amount state, the participation of the user is limited so as not to perform the event.

Further, the price event processing server 60 may also be configured to first perform event processing when receiving the pre-payment event preprocessing request signal, and then perform automatic payment of only an event participation amount when payment for the product is not made later.

That is, when the event processing is performed first, and when payment for the product is not made later, only the prize-winning participation amount is automatically paid. Such an automatic payment is performed by interworking between the price event processing server 60 and the my-price event application 4.

Further, the price event processing server 60 is configured to perform calculation using an expected amount of prize money and a participation amount input by the user so that the prize-winning probability is (participation amount)/(expected amount of prize money).

At this time, the participation amount is an event participation amount, and may be at least support amount provided by an affiliate at which payment for the product is made, or an amount obtained by adding an additional participation amount of the user to the support amount of the affiliate.

Further, the price event processing server 60 is a server performing processing so that the event may be conducted by grouping affiliates that provide the same support amount into the same price group so as to perform the same event, or grouping affiliates that provide the same final promotion expense reflecting a payment amount and a discount rate of each affiliate into the same price group.

Further, the price event processing server 60 performs processing so that users who purchase a product at the affiliates classified as the same price group and directly selecting the same prize-winning probability are secondarily grouped to perform the prize-winning processing randomly according to the probability.

For example, as illustrated in FIG. 2, the price event processing server 60 groups affiliates that provide 1,000 won as a promotion support amount for 20,000 won, that is, affiliates that provide a promotion discount rate of 5% into the same price group and conducts the event.

At this time, since the promotion amount of 5% is basically provided to the user, all the users who select a discount rate of 5% win the prize, thus the prize-winning probability is 5/5, that is, 1. As a result, all the users win the prize.

Further, in the case of users who select a discount rate of 6%, five among total 6 users win the prize, thus the prize-winning probability is 5/6.

Accordingly, the price event processing server 60 groups users who select the same discount rate into a secondary group at the moment when the users select a specific discount rate, and then conduct the prize-winning event. For example, when any one user selects a discount rate of 7% and there was no user who selects the discount rate of 7% in the past, the price event processing server 60 newly creates a 7% group, and provides a specific number (e.g., 5) that is randomly extracted to the user.

At this time, discount rate groups that the user may select are each already given a prize-winning number, and when the user selects any one discount rate group, the price event processing server 60 randomly generates a new number and provides the number to the user, and confirms whether the user won or not, thereby performing the prize-winning processing.

When the number provided to the user is 5, the user wins the discount rate of 7% to satisfy an expected discount rate, and if the received number is 4, the user may not receive the discount rate of 7%.

Therefore, according to the present invention, the user may freely select the expected discount rate. In this case, selecting the expected discount rate means that the user directly selects an expected prize-winning probability.

Accordingly, the price event processing server 60 performs the prize-winning processing by classifying users as a group of probability that the user selects, giving the user a randomly generated number, predetermining the number of prize-winners according to the probability, and comparing the number given to the user with a pre-registered prize-winning number to determine whether the user won or not.

Describing in more detail, for example, in a case in which in a 7% discount rate group, when any one user is already given a number of 4 and another user selects the discount rate of 7% later and is given a number of 5, since the number of 4 given to the previous user is a non-prize winning number, it can be appreciated that an actual probability of the next user is 5/6.

That is, since the number given to the previous user affects the prize-winning probability of the next user, the probability is exactly processed according to a mathematical combination method in the present invention.

Accordingly, the price event processing server 60 performs processing that an actual probability of each point in time is processed according to the mathematical combination method so that a prize-winning probability of another user of a previous point in time affects a prize-winning probability of a user of a later point in time by a processing method of classifying users as a probability group selected by the user and performing the prize-winning processing in real time.

Further, the price event processing server 60 automatically randomly extracts any one probability of a plurality of probabilities registered so that a sum of all the probabilities is 1, and provides the extracted probability to the user to calculate an amount of prize money of the user through prize-winning processing that "(sum of all promotion expenses of affiliate) × (probability provided to user) = amount of prize money".

Meanwhile, the participation amount of the user may be a fixed amount according to a promotion event of the affiliate or a variable amount when a user adds up an additional accumulated money of the user to the promotion expenses.

That is, according to the present invention, the user may participate in a prize-winning event through pre-payment of a promotion amount (e.g., participation amount of a specific rate) provided by the affiliate, but may also participate in the prize-winning event with an additional participation amount such as 2 times, 3 times, or 4 times. In this case, 2, 3, or 4 rounds of different prize-winning events may be conducted, or an amount 2, 3, or 4 times the amount of prize money may be provided. Since all the processings are the same as each other in terms of probability, the prize-winning event may be sufficiently freely conducted within a financial resource.

Further, when there exists a prize-winner, the (sum of all promotion expenses of affiliate) is calculated by the price event processing server 60 so that the (sum of all promotion expenses of affiliate) is changed every time the prize money of the user is provided.

Further, the price event processing server 60 is configured to relay product payment information of the user, and when the payment is completed, transmit the same authentication code which is payment confirmation information to the affiliate terminal 80 and the user terminal 2, respectively.

In a case of having a meal in a restaurant, the user may participate in the pre-payment prize-winning event provided in the present invention, complete payment after the meal, and then present a payment authentication code provided from the price event processing server 60 to the affiliate, and since the same payment authentication code is received in the affiliate terminal 80, it is possible to confirm whether the user is a user who completed the payment by confirming the payment authentication code of the user.

To this end, preferably, the payment authentication code further includes additional information such as product information or a table number.

Further, as illustrated in FIG. 4, the my-price event application 4 is configured to automatically request access to information on an affiliate located within a certain radius around the user when an operating signal is generated at a specific point, and transmit location information of the user to the price event processing server 60. That is, the my-price event application 4 automatically transmits the location information of the user through the GPS, and receives the information on the affiliate within the certain radius from the price event processing server 60.

Thereby, the user may select an affiliate through the my-price event application 4. In this case, the my-price event application 4 includes a selection window 14 so that the information on the affiliate within the radius is output and selected on a screen 12, and an affiliate information output window 16 for outputting information of each affiliate, for example, discount rate information on the screen.

Further, the user selects a specific product to be purchased in the my-price event application 4, and product information matched to the affiliate information is registered in the price event processing server 60 in advance. Thus, in the my-price event application 4, the product information is selectively output on a product information selection window 18 by transmission from the server.

The information on the product that the user wants to purchase needs to be essentially input since there is a case in which a discount rate is different for each product.

Further, the my-price event application 4 includes a temporary payment selection button 20 for performing temporary payment. Herein, the temporary payment means that a participation amount (for example, an amount corresponding to 5% of a price of a product that the user wants to purchase in an affiliate that provides a discount rate of 5%) for participating the prize-winning event is paid.

When the temporary payment is performed, payment of the participation amount is made, thus the prize-winning event, that is, a my-price event is conducted. The screen includes an expected amount selection window 24 for selecting the expected discount rate or the expected amount of prize money. When selecting the expected amount, the price event processing server 60 calculates a prize-winning probability and output the probability in a probability window 26.

When the prize-winning event is conducted, the my-price event application 4 outputs prize money amount information in a prize money amount window 38, and displays an actual amount of payment obtained by subtracting the amount of prize money from the price of the product in a payment amount output window 30.

Further, the my-price event application 4 includes a button 32 for performing the payment. When the payment is made, the my-price event application 4 receives a payment authentication number from the price event processing server 60 and output the payment authentication number in a payment authentication number window 34.

Preferably, the my-price event application 4 may be configured so that a product code or a table number is input at the time of payment as necessary.

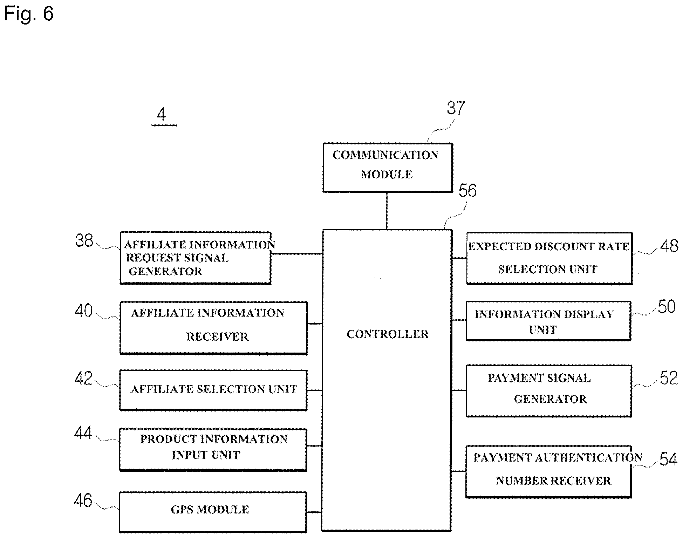

FIG. 6 is a block diagram illustrating a configuration of a my-price event application installed in an apparatus for processing a price event according to one embodiment of the present invention.

Referring to FIG. 6, the my-price event application 4 installed in the apparatus for processing a price event according to one embodiment of the present invention includes: an affiliate information request signal generator 38 configured to automatically generate an affiliate information request signal when an application operating signal is generated; an affiliate information receiver 40 configured to receive information on a plurality of affiliates from the price event processing server 60; an affiliate selection unit 42 configured to select and input any one affiliate of the plurality of affiliates; a product information input unit 44 configured to input a purchase signal for a product sold in the affiliate; an expected discount rate selection unit 48 configured to input an expected discount rate desired to be provided for the product; an information display unit 50 configured to display information received from the price event processing server 60 on a screen; and a controller 56 configured to control so as to conduct a prize-winning event for a discount rate selected by a user through the price event processing server 60 at the time of payment for a specific product at a specific affiliate by interworking with the price event processing server 60, and output the information thereon.

In addition, the my-price event application further includes a GPS module 46 configured to automatically extract and transmit location information of the user in order to request information on an affiliate located within a certain radius around the user.

Further, the my-price event application 4 further includes a payment signal generator 52 configured to generate a payment signal for a price of the product to be purchased, and a payment authentication number receiver 54 configured to receive a payment authentication number that may be provided from the price event processing server 60 and presented to the affiliate.

At this time, the payment signal generator 52 is configured to automatically transmit a payment completion signal to the price event processing server 60 when receiving a payment signal from a payment server 82.

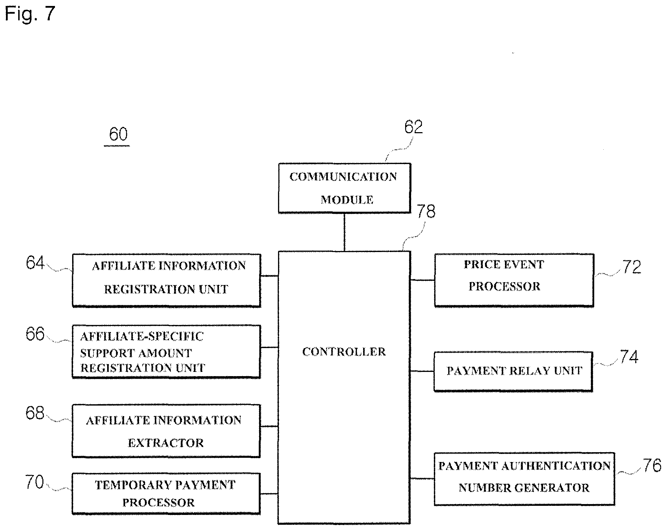

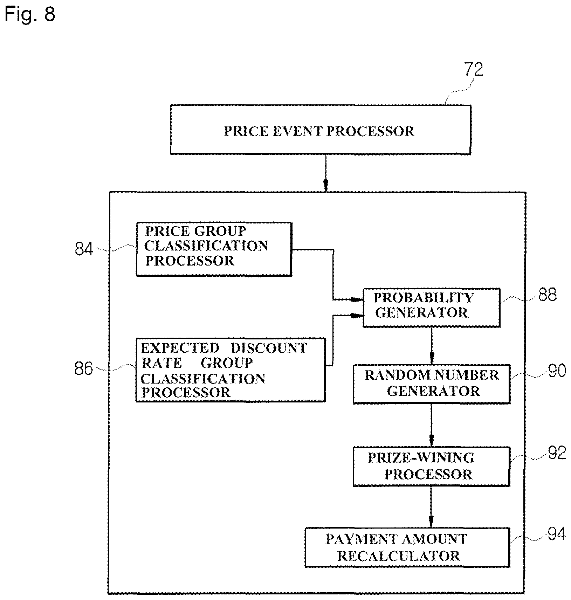

FIG. 7 is a block diagram illustrating a configuration of a price event processing server included in the system for processing a price event according to one embodiment of the present invention, and FIG. 8 is a diagram illustrating a detailed configuration of a price event processor included in the apparatus for processing a price event according to one embodiment of the present invention.

Referring to FIGS. 7 and 8, the price event processing server included in the system for processing a price event according to one embodiment of the present invention includes: a communication module 62 configured to perform communication with the affiliate terminal 80 and the user terminal 2; an affiliate information registration unit 64 configured to register location information and product (or service) information of the affiliate; an affiliate-specific support amount registration unit 66 configured to register information on a promotion discount rate (or discount amount) of each affiliate to be provided to the user; an affiliate information extractor 68 configured to extract affiliate information by a specific affiliate selection signal provided from the user terminal 2; a price event processor 72 configured to perform processing for whether the user won or not and for an amount of prize money by forming a price group through affiliate classification or product classification and applying a prize-winning probability selected by the user; a controller 78 configured to control so that affiliate-specific or product-specific promotion discount rate information is registered, respectively, and a sum of the promotion discount rates is used as a financial resource, and the user selects a predetermined prize-winning probability in real time for processing whether the user won or not.

At this time, the price event processing server 60 further includes a temporary payment processor 70 configured to perform preprocessing of payment so that a promotion support amount may be obtained before actual payment.

In addition, the price event processing server 60 further includes: a payment relay unit 74 configured to relay a payment signal generated in the user terminal 2 to the payment server 82 and relay payment information to the user terminal 2; and a payment authentication number generator 76 configured to generate and transmit a payment authentication number to the user terminal 2 and the affiliate terminal 80 when the payment is completed by the user to allow the affiliate so as to confirm which user makes the payment and for which product the payment is made.

At this time, the price event processing server 60 may perform processing so that different promotion support amounts are provided for different products of the same affiliate.

Meanwhile, the price event processing server 60 receives information on selection of a product or service to be purchased, determines how much promotion discount rate is matched to the product or service, and collects and stores information on the sale of the product or service.

Further, the product information input unit 44 has a function of performing an input of an ordered menu and a table number.

Preferably, the price event processor 72 includes: a price group classification processor 84 configured to primarily classify affiliates that provide the same promotion discount rate as a group; an expected discount rate group classification processor 86 configured to secondarily classify users who select the same prize-winning probability as a group; a probability generator 88 configured to calculate and generate a prize-winning probability according to an expected discount rate of the user; a prize-wining processor 92 configured to perform prize-winning processing of the user and calculating an amount of prize money; and a payment amount recalculator 94 configured to recalculate a final payment amount by subtracting the amount of prize money from the payment amount of the user.

More preferably, the price event processor 72 includes a random number generator 90 configured to generate a random number to confirm whether the user won or not when the server randomly extracts and registers a prize-winning number for a preset number of prize-winners, and an event participation signal of the user is generated.

Functions and operation of the system for processing a price event according to one embodiment of the present invention having the above-described configuration will be described in detail with reference to the accompanying drawings.

A processing process of the system for processing a price event according to one embodiment of the present invention is largely divided into the following steps of: a) receiving, by the price event processing server 60, a specific affiliate selection signal from the user terminal 2; b) receiving, by the price event processing server 60, a selection signal for purchase of a specific product sold at the affiliate from the user terminal 2; c) receiving, by the price event processing server 60, a selection signal for expected prize money amount information or desired prize-winning probability information from the user terminal 2; d) performing, by the price event processing server 60, event prize-winning processing; and e) transmitting, by the price event processing server 60, prize-winning information and prize money amount information to the user terminal 2.

At this time, before the a) receiving, the price event processing server 60 receives and registers a unique number or a name of the affiliate, product or service information, price information for each product or service, and information on an affiliate-specific support amount (or support discount rate) from the affiliate.

Accordingly, the price event processing server 60 constructs a database (DB) so that the user may access support discount rate information of affiliates and select a product at a specific affiliate.

Further, according to the present invention, before the a) receiving, the price event processing server 60 extracts information on an affiliate located within a certain radius around the user according to user location information and affiliate request information transmitted from the user terminal 2 and provides the extracted information to the user terminal 2.

For example, when a user has a meal in a restaurant and wants to conduct the prize-winning event, the location information of the user may be automatically transmitted to the server through the GPS module, and the user may receive information on an affiliate near the user only by operating the my-price event application 4.

At this time, preferably, the processing process further includes, before the a) receiving, giving and registering, by the price event processing server 60, different discount rates for each product or service, and the registered discount rates are provided so that the user may access.

In this state, when the user wants to purchase a specific product sold at a specific affiliate and operates a prize-winning event service for this, the c) receiving further includes receiving, by the price event processing server 60, expected prize money amount information or expected discount rate information from the user terminal 2.

Then, the price event processing server 60 calculates and provides a prize-winning probability of the user.

The c) receiving may further include receiving, by the price event processing server 60, event participation amount-changed information for a fixed event participation amount from the user terminal 2 to perform calculation so as to increase or decrease the prize-winning probability. That is, when changing the participation amount, the prize-winning probability may be changed, therefore, the variable information may be provided so that the user may recognize.

Further, the d) performing further includes performing, by the price event processing server 60, event processing by automatically subtracting an amount as much as the participation amount from an accumulated money of an account of the user when receiving a pre-payment event preprocessing request signal from the user terminal 2.

At this time, the d) performing further includes first performing, by the price event processing server 60, event processing when receiving the pre-payment event preprocessing request signal, and then performing automatic payment of only an event participation amount when payment for the product is not made later.

Further, the d) performing includes: creating, by the price event processing server 60, a price group of affiliates that provide the same promotion discount rate, wherein the price group provides the same support amount calculated by multiplying the promotion discount rate by a payment amount; creating a group of users who select the same specific prize-winning probability in the price group; randomly determining, by the price event processing server 60, a prize-winning number and generating a random number for the user in a state in which the number of prize-winners in the prize-winning probability group is constantly fixed; and comparing, by the price event processing server 60, the number given to the user and the prize-winning number to determine whether the user won or not.

For example, the price event processing server 60 groups affiliates that provide 1,000 won as a promotion support amount for 20,000 won, that is, affiliates that provide a promotion discount rate of 5% into the same price group and conducts the event.

At this time, since the promotion amount of 5% is basically provided to the user, all the users who select a discount rate of 5% win the prize, thus the prize-winning probability is 5/5, that is, 1. As a result, all the users win the prize.

Further, in a case of users who select a discount rate of 6%, five among total 6 users win the prize, thus the prize-winning probability is 5/6.

Accordingly, the price event processing server 60 groups users who select the same discount rate into a secondary group at the moment when the users select a specific discount rate, and then conduct the prize-winning event. For example, when any one user selects a discount rate of 7% and there was no user who selects the discount rate of 7% in the past, the price event processing server 60 newly creates a 7% group, and provides a specific number (e.g., 5) that is randomly extracted to the user.

At this time, discount rate groups that a user may select are each already given a prize-winning number, and when the user selects any one discount rate group, the price event processing server 60 randomly generates a new number and provides the number to the user, and confirm whether the user won or not, thereby performing the prize-winning processing.

When the number provided to the user is 5, the user wins the discount rate of 7% to satisfy the expected discount rate, and if the received number is 4, the user may not receive the discount rate of 7%.

At this time, in the calculating, by the price event processing server 60, the prize-winning probability, the prize-winning probability is calculated as (event participation amount of user)/(expected amount of prize money selected by user).

Further, in the d) performing, the price event processing server 60 performs prize-winning processing that "(sum of all promotion expenses of affiliate) × (probability provided to user) = amount of prize money" by automatically randomly extracting any one probability of a plurality of probabilities registered so that a sum of all the probabilities is 1, and providing the extracted probability to the user.

Meanwhile, preferably, the price event processing server 60 may perform update so that the (sum of all promotion expenses of affiliate) is changed every time the amount of prize money of the user is provided.

Further, the processing process according to the present invention further includes: after the e) transmitting, relaying, by the price event processing server 60, a payment signal generated in the user terminal 2 to the payment server 82 and relaying payment information to the user terminal 2; generating a payment authentication number when the payment is completed by the user; and transmitting the payment authentication number to the user terminal 2 and the affiliate terminal 80 to allow the affiliate so as to confirm which user makes the payment and for which product the payment is made.

In addition, the processing process according to the present invention further includes: after the e) transmitting, collecting, by the price event processing server 60, user information and information on a product purchased by the user, and colleting product-specific promotion discount rate information together.

Hereinafter, a system for processing a price event according to another embodiment of the present invention will be described in detail with reference to the accompanying drawings.

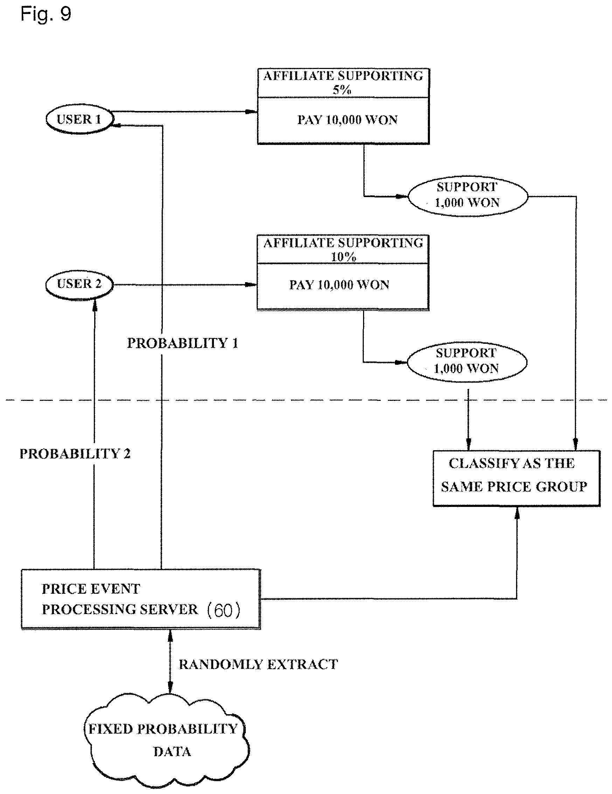

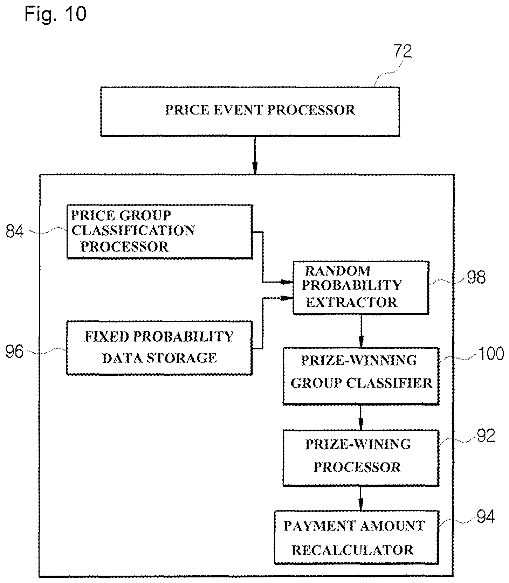

FIG. 9 is a diagram illustrating a state of performing prize-winning processing in an automatic random manner through the system for processing a price event according to another embodiment of the present invention, and FIG. 10 is a diagram illustrating a detailed configuration of the price event processor of FIG. 9.

Referring to FIGS. 9 and 10, the system for processing a price event according to another embodiment of the present invention is a system, in which when an order is placed for the specific product or service, an event operation server randomly extracts any one of preregistered fixed probabilities or a plurality of probabilities, and transmits the extracted probability to the user, so as to allow the user to select a final probability, thereby generating a probability group, and performs prize-winning processing so that the user may feel a noticeable effect of a discount in real time.

To this end, in the price event processing server 60, the price event processor 72 further includes a fixed probability data storage 96 configured to store fixed probability data; a random probability extractor 98 configured to randomly extract a probability to be provided to the user; and a prize-winning group classifier 100 configured to classify a prize-winning group.

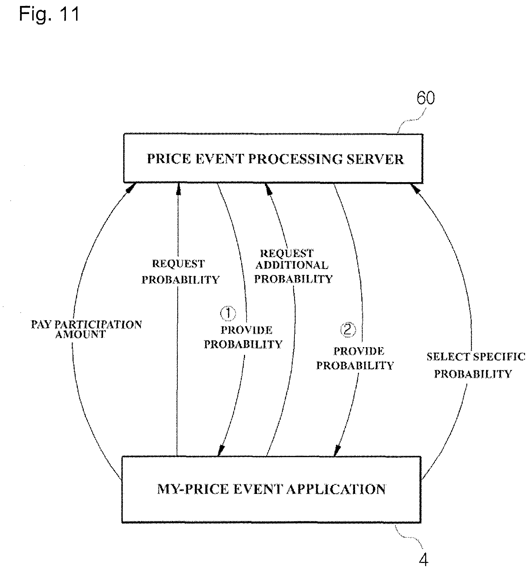

Hereinafter, the system for processing a price event according to another embodiment of the present invention will be described in detail with reference to FIGS. 11 to 14.

FIG. 11 is a diagram illustrating a prize-winning processing state according to a sequential request for an additional probability after payment of a participation amount once through the system for processing a price event according to another embodiment of the present invention.

Referring to FIG. 11, the system for processing a price event according to another embodiment of the present invention illustrated in FIG. 11 may perform processing so that the user may receive prize-winning probabilities automatically provided from the price event processing server 60 several times, and payment of a participation amount is separately performed so that the participation amount is applied to any one probability desired by the user.

To this end, after a first participation amount is paid, when the user requests an additional probability in addition to the probability provided thereto, the price event processing server 60 performs prize-winning processing by receiving payment of an additional participation amount and applying the additional participation amount to the probability selected by the user among the plurality of probabilities.

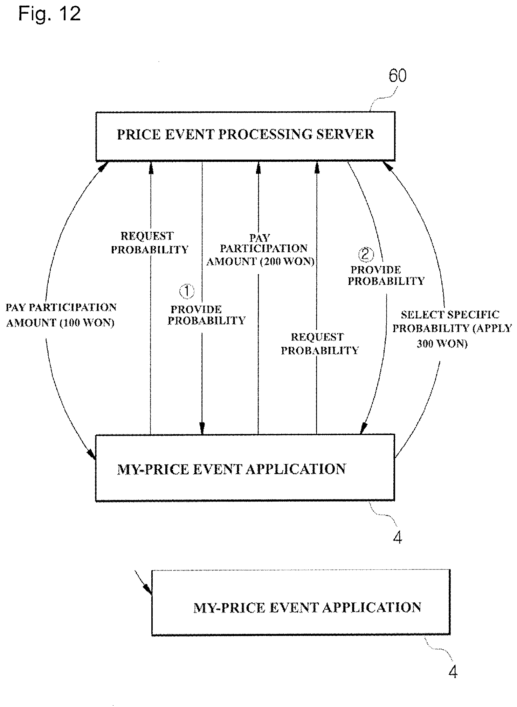

FIG. 12 is a diagram illustrating payment of a participation amount of each round and a state of applying participation amounts in a lump due to a sequential request for an additional probability through the system for processing a price event according to another embodiment of the present invention.

Referring to FIG. 12, the system for processing a price event according to another embodiment of the present invention illustrated in FIG. 12 may perform processing so that the user may receive prize-winning probabilities automatically provided from the price event processing server 60 several times, and select any one desired probability, and the entire participation amount is applied to the selected probability.

To this end, the price event processing server 60 may receive payment of a participation amount of each round from the same user, generate different probabilities resulting from a sequential request for an additional probability, and then apply the participation amounts in a lump with respect to any one probability selected by the user.

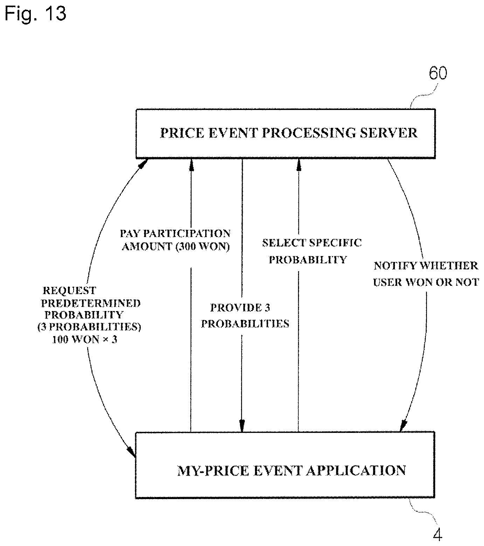

FIG. 13 is a diagram illustrating that a plurality of probabilities are requested, any one desired probability is selected and applied through the system for processing a price event according to another embodiment of the present invention.

Referring to FIG. 13, the system for processing a price event according to another embodiment of the present invention illustrated in FIG. 13 may perform processing so that the user may receive prize-winning probabilities automatically provided from the price event processing server 60 several times, and the entire participation amount is applied to any one probability desired by the user.

To this end, the price event processing server 60 randomly extracts and provides a plurality of probabilities by receiving a request for provision of a plurality of probabilities from the user, and performs prize-winning processing with respect to any one probability selected by the user among the plurality of probabilities.

Next, functions and operation of the system for processing a price event according to another embodiment of the present invention will be described in detail with reference to the accompanying drawings.

In the above-described embodiment, an example, in which the fixed probability type processing in which a predetermined prize-winning probability as a financial resource provided by an affiliate is provided to the user who makes a purchase, and the variable probability type processing in which a random probability is provided to the user who makes a purchase are separately and respectively applied to the affiliate and the user to be processed, has been described. But, in another embodiment of the present invention, a technique for mixed type processing in which the fixed probability type processing and the variable probability type processing are mixed will be described.

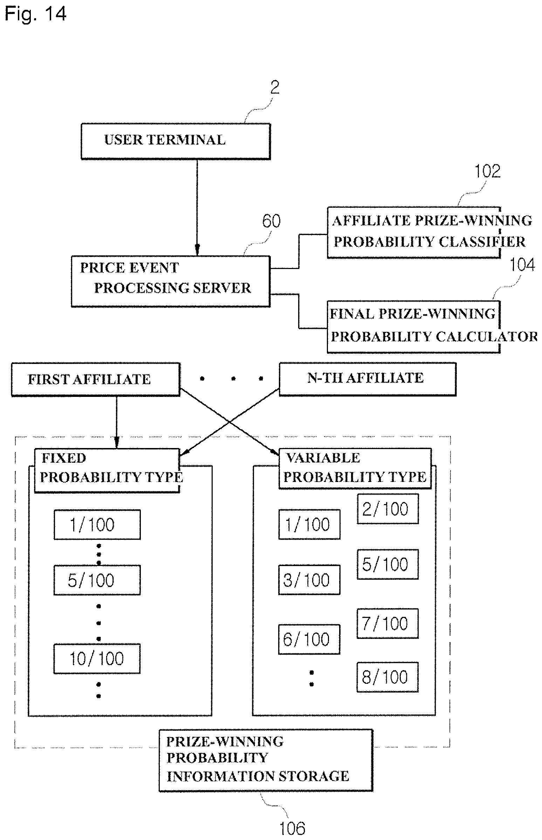

FIG. 14 is a diagram illustrating a configuration of mixed probability type processing through the system for processing a price event according to another embodiment of the present invention.

Referring to FIG. 14, the price event processing server 60 included in the system for processing a price event according to another embodiment of the present invention includes a prize-winning probability information storage 106 configured to store a fixed probability calculated by using a financial resource paid by an owner of an affiliate and different variable probabilities calculated by using the financial resource paid by the owner of the affiliate.

In the fixed probability type processing, prize-winning probabilities are fixed different from each other depending on the affiliates, for example, in a case of an affiliate A, when 5% is provided as a financial resource, a prize-winning probability of 1/20 may be provided to the user.

Meanwhile, in the variable probability type processing, probabilities to be provided to the user who makes a purchase at the same affiliate may be different from each other depending on the users. Even in the same case in which an owner of the affiliate A provides the financial resource of 5% at the time of the sale of a product, the price event processing server 60 may convert the purchase probability of 1/20 that may be generated by the financial resource of 5% into 5/100, change the probability into a probability smaller than or larger than 5/100, such as 1/100 and 6/100, and provide the changed probability to the user.

That is, in the variable probability type processing, even though the owner of the affiliate provides a constant financial resource, the respective users may receive prize-winning probabilities different from each other, therefore, tension of the user may be more increased than the fixed probability type processing.

A variable probability pool may be significantly expanded and built in advance so that a plurality of probabilities may be extracted to be provided to a plurality of users, and it can be appreciated that even at this time, when all probabilities are converted into a financial resource, the same amount of financial resource as that of the fixed probability type processing is consumed.

To this end, the price event processing server 60 includes an affiliate prize-winning probability classifier 102 configured to classify information on a financial resource provided by each affiliate or for each specific product, and affiliate selection information on whether to apply the fixed probability and the variable probability at the same time, or apply only the fixed probability or only the variable probability.

In the mixed probability type processing, when a user makes a payment in an affiliate of applying the mixed probability type processing, the price event processing server 60 may recalculate a final probability to be provided to the user who purchases a product at the affiliate through the fixed probability type processing and the variable probability type processing.

That is, in a state in which the user secures a basic fixed probability provided by the affiliate, a variable probability randomly extracted by the price event processing server 60 may be provided to add up the fixed probability and the variable probability, thereby determining a final prize-winning probability.

Accordingly, the price event processing server 60 includes a final prize-winning probability calculator 104 configured to calculate a final probability by adding up a fixed probability preset for each affiliate and a randomly extracted variable probability.

At this time, in order to perform the mixed probability type processing, the price event processing server 60 needs to divide the financial resource provided by the affiliate into a fixed type and a variable type.

That is, for example, in a case of an affiliate planning to provide a promotion expense of 10% upon purchase of a product, it is preferable that the financial resource is divided into 5% of financial resource for performing the fixed probability type processing, and 5% of financial resource for performing the variable probability type processing. Herein, a divided ratio may be changed according to selection of an owner of the affiliate.

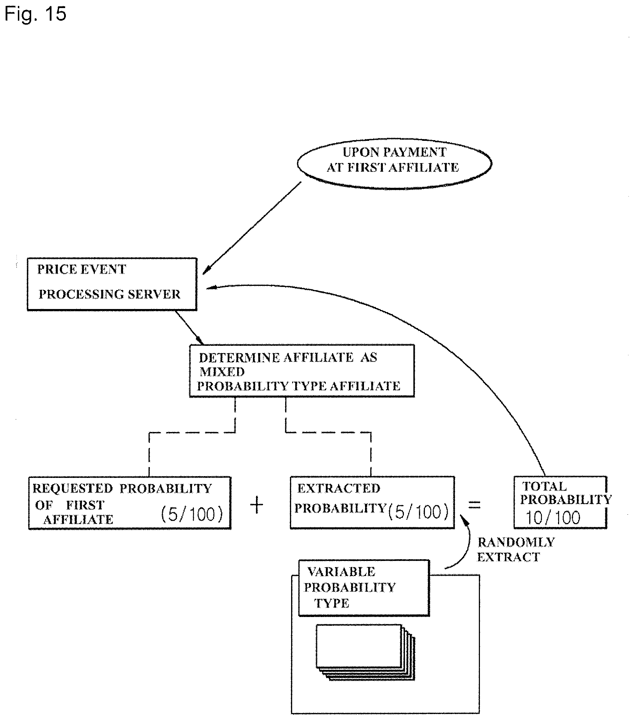

FIG. 15 is a diagram illustrating a mixed probability type processing state through the system for processing a price event according to another embodiment of the present invention.

Referring to FIG. 15, in the system for processing a price event according to another embodiment of the present invention, when a user makes a payment at any one affiliate (e.g., first affiliate) in which the fixed probability type processing and the variable probability type processing are performed at the same time, the fixed probability type processing and the variable probability type processing are individually performed.

First, the price event processing server 60 receives an application signal of a price event using a probability from an affiliate, and the affiliate may select any one of the fixed probability type processing and the variable probability type processing, or the mixed probability type processing in which the fixed probability type processing and the variable probability type processing are mixed.

If the first affiliate selects the mixed probability type processing, the price event processing server 60 stores information indicating that the first affiliate is an affiliate selecting the mixed probability type processing, in the affiliate prize-winning probability classifier 102.

Prior to this, the price event processing server 60 builds a fixed probability pool and a variable probability pool according to a discount rate selected by each of the plurality of affiliates. The fixed probability pool provides the fixed probability which is not changed depending on the discount rate selected by the affiliate, thus does not need to have a form of pool, but the variable probability pool is an essential configuration since even when the affiliate selects a specific discount rate, various probabilities may be included in the pool.

That is, when the affiliate selects the variable probability type processing while providing a discount rate of 5%, for example, various probabilities such as 1/200, 2/200, 3/100, and ... may be present so as to be extractable in the variable probability pool of 5%, and a sum of all the probabilities is the discount rate of 5%, that is, 5/100.

Therefore, the variable probability pool included in the price event processing server 60 is built for each discount rate provided by the affiliate.

Meanwhile, a financial resource provided by the affiliate selecting the mixed probability type processing needs to be divided into the fixed type and the variable type.

That is, for example, in a case of an affiliate planning to provide a promotion expense of 10% upon purchase of a product, it is preferable that the financial resource is divided into 5% of financial resource for performing the fixed probability type processing and 5% of financial resource for performing the variable probability type processing. Herein, the divided ratio may also be changed according to selection of an owner of the affiliate.

In this state, when the user operates the my-price event application 4 installed in the terminal 2 to attempt a payment at the first affiliate, the price event processing server 60 determines as which probability type of affiliate the first affiliate is classified and registered through the affiliate prize-winning probability classifier 102.

If the first affiliate is classified as the mixed probability type affiliate, the price event processing server 60 first extracts a probability corresponding to the fixed type financial resource provided by the affiliate from the fixed probability pool of the prize-winning probability information storage 106.

For example, when the fixed financial resource provided by the affiliate is a discount rate of 5%, the fixed probability is 5/100.

Subsequently, the price event processing server 60 randomly extracts a probability corresponding to the variable type financial resource provided by the affiliate from the variable probability pool of the prize-winning probability information storage 106.

For example, when the probability extracted by the price event processing sever 60 from the variable probability pool is 3/100, the price event processing server 60 calculates a mixed probability in which the fixed probability and the variable probability are mixed. In this case, the mixed probability is 8/100, which is a final probability that the consumer may use.

Further, when the probability extracted by the price event processing sever 60 from the variable probability pool is 5/100, the price event processing server 60 calculates a mixed probability in which the fixed probability and the variable probability are mixed. In this case, the mixed probability is 10/100, which is a final probability that the consumer may use.

Meanwhile, the apparatus, system, and method for processing a price event according to embodiments of the present invention is not limited to above described embodiment, but may be variously modified without departing from the technical gist of the present invention.

### [Description of Reference Numerals]

2: user terminal, 4: my-price event application
60: price event processing server, 80: affiliate terminal
82: payment server

## Claims

1. A method for processing a price event, comprising:
a) receiving, by a price event processing server 60, a specific affiliate selection signal from a user terminal 2;
b) receiving, by the price event processing server 60, a selection signal for purchase of a specific product sold at the affiliate from the user terminal 2;
c) receiving, by the price event processing server 60, a selection signal for expected prize money amount information or desired prize-winning probability information from the user terminal 2;
d) performing, by the price event processing server 60, event prize-winning processing; and
e) transmitting, by the price event processing server 60, prize-winning information and prize money amount information to the user terminal 2.

2. The method of claim 1, further comprising: before the a) receiving,
receiving and registering, by the price event processing server 60, a unique number or a name of the affiliate, product or service information, price information for each product or service, and information on an affiliate-specific support amount (or support discount rate) from the affiliate.

3. The method of claim 1, further comprising: before the a) receiving,
extracting, by the price event processing server 60, information on an affiliate located within a certain radius around a user according to user location information and affiliate request information transmitted from the user terminal 2 and providing the extracted information to the user terminal 2.

4. The method of claim 1, further comprising: before the a) receiving,
giving and registering, by the price event processing server 60, different discount rates for each product or service.

5. The method of claim 1, further comprising: in the c) receiving,
calculating and providing, by the price event processing server 60, a prize-winning probability of a user when receiving the expected prize money amount information from the user terminal 2.

6. The method of claim 1, further comprising: in the c) receiving,
receiving, by the price event processing server 60, event participation amount-changed information for a fixed event participation amount from the user terminal 2 to perform calculation so as to increase or decrease the prize-winning probability.

7. The method of claim 1, further comprising: in the d) performing,
performing, by the price event processing server 60, event processing by automatically subtracting an amount as much as a participation amount from an accumulated money of an account of a user when receiving a pre-payment event preprocessing request signal from the user terminal 2.

8. The method of claim 1, further comprising: in the d) performing,
first performing, by the price event processing server 60, event processing when receiving a pre-payment event preprocessing request signal, and then performing automatic payment of only an event participation amount when payment for the product is not made later.

9. The method of claim 1, further comprising: in the d) performing,
creating, by the price event processing server 60, a price group of affiliates that provide the same promotion discount rate, wherein the price group provides the same support amount calculated by multiplying the promotion discount rate by a payment amount;
creating a group of users who select the same specific prize-winning probability in the price group;
randomly determining, by the price event processing server 60, a prize-winning number and generating a random number for a user in a state in which the number of prize-winners in a prize-winning probability group is constantly fixed; and
comparing, by the price event processing server 60, the number given to the user and the prize-winning number to determine whether the user won or not.

10. The method of claim 9, wherein the price event processing server 60 calculates the prize-winning probability as (event participation amount of user)/(expected amount of prize money selected by user).

11. The method of claim 1, wherein in the d) performing, the price event processing server 60 performs the prize-winning processing that "(sum of all promotion expenses of affiliate) × (probability provided to user) = amount of prize money" by automatically randomly extracting any one probability of a plurality of probabilities registered so that a sum of all the probabilities is 1, and providing the extracted probability to the user.

12. The method of claim 1, wherein in the d) performing, after a first participation amount is paid, when a user requests an additional probability in addition to the probability provided thereto, the price event processing server 60 performs the prize-winning processing by receiving payment of an additional participation amount and applying the additional participation amount to the probability selected by the user among a plurality of probabilities.

13. The method of claim 1, wherein in the d) performing, the price event processing server 60 receives payment of a participation amount of each round from the same user, generates different probabilities resulting from a sequential request for an additional probability, and then applies the participation amounts in a lump with respect to any one probability selected by the user.

14. The method of claim 1, wherein in the d) performing, the price event processing server 60 randomly extracts and provides a plurality of probabilities by receiving a request for provision of a plurality of probabilities from a user, and performs the prize-winning processing with respect to any one probability selected by the user among the plurality of probabilities.

15. The method of claim 1, further comprising: in the d) performing,
performing, by the price event processing server 60, update so that (sum of all promotion expenses of affiliate) is changed every time an amount of prize money of a user is provided.

16. The method of claim 1, further comprising: after the e) transmitting,
relaying, by the price event processing server 60, a payment signal generated in the user terminal 2 to a payment server 82 and relaying payment information to the user terminal 2;
generating a payment authentication number when the payment is completed by the user; and
transmitting the payment authentication number to the user terminal 2 and an affiliate terminal 80 to allow the affiliate so as to confirm which user makes the payment and for which product the payment is made.

17. The method of claim 1, further comprising, after the e) transmitting,
collecting, by the price event processing server 60, user information and information on a product purchased by the user, and colleting product-specific promotion discount rate information together.

18. A system for processing a price event, comprising:
a user terminal 2 provided with a my-price event application 4 configured to generate a pre-payment event preprocessing request signal to a price event processing server 60 by receiving affiliate-specific support amount information, selecting and inputting a product of any one affiliate, and inputting event participation amount and expected prize money amount information, generate a final event prize-winning processing request signal by receiving prize-winning probability information, receive prize-winning result information and information on a final amount of payment and output the received information on a screen, generate a final payment request signal, and receive and output a result of the final payment request;
an affiliate terminal 80 configured to register affiliate information and support amount (or discount rate) information in the price event processing server 60 and receive and output payment information of a user; and
the price event processing server 60 configured to receive and register product information, price information, and event support amount information of the selected affiliate from the affiliate terminal 80, receive an event-related processing request signal including the participation amount and expected prize money amount information from the user terminal 2 to calculate a prize-winning probability, provide the calculated prize-winning probability to the user terminal 2, and when the prize-winning probability is finally selected, perform event processing to determine whether the user won or not in real time.

19. The system of claim 18, wherein the price event processing server 60 receives and registers a unique number or a name of the affiliate, product or service information, price information for each product or service, and information on an affiliate-specific support amount (or support discount rate) from the affiliate.

20. The system of claim 18, wherein the my-price event application 4 is configured to automatically request information on an affiliate within a certain radius to the price event processing server 60 at the time of operation.

21. The system of claim 18, wherein the price event processing server 60 is configured to perform event processing by automatically subtracting an amount as much as the participation amount from an accumulated money of an account of the user when the pre-payment event preprocessing request signal is received.

22. The system of claim 18, wherein the price event processing server 60 is configured to perform event processing first when receiving the pre-payment event preprocessing request signal, process an account of the user to be in a negative accumulated money amount state when payment for the product is not made later, and limit event participation if the account of the user is in the negative accumulated money amount state later.

23. The system of claim 18, wherein the price event processing server 60 is configured to first perform event processing when receiving the pre-payment event preprocessing request signal, and then perform automatic payment of only the event participation amount when payment for the product is not made later.

24. The system of claim 18, wherein the price event processing server 60 is configured to perform calculation using an expected amount of prize money and a participation amount input by the user so that the prize-winning probability is (participation amount)/(expected amount of prize money).

25. The system of claim 24, wherein the participation amount is an event participation amount, and is at least a support amount provided by an affiliate at which payment for a product is made, or an amount obtained by adding an additional participation amount of the user to the support amount of the affiliate.

26. The system of claim 18, wherein the price event processing server 60 is a server configured to perform processing so that an event is conducted by grouping affiliates that provide the same support amount into the same price group so as to perform the same event, or grouping affiliates that provide the same final promotion expense reflecting a payment amount and a discount rate of each affiliate into the same price group.

27. The system of claim 18, wherein the price event processing server 60 is a server configured to perform processing so that users who purchase a product at affiliates classified as the same price group and directly selecting the same prize-winning probability are secondarily grouped to perform prize-winning processing randomly according to the probability.

28. The system of claim 18, wherein the my-price event application 4 is configured to automatically request access to information on an affiliate located within a certain radius around the user when an operating signal is generated at a specific point, and transmit location information of the user to the price event processing server 60.

29. The system of claim 18, wherein the price event processing server 60 is configured to relay product payment information of the user, and when the payment is completed, transmit the same authentication code which is payment confirmation information to the affiliate terminal 80 and the user terminal 2, respectively.

30. The system of claim 18, wherein when receiving product payment information of the user, the price event processing server 60 receives a table number of the affiliate or a product number, together.

31. The system of claim 18, wherein the price event processing server 60 performs prize-winning processing by classifying users as a group of probability that the user selects, giving the user a randomly generated number, predetermining the number of prize-winners according to the probability, and comparing the number given to the user with a pre-registered prize-winning number to determine whether the user won or not.

32. The system of claim 18, wherein the price event processing server 60 performs processing that an actual probability of each point in time is processed according to a mathematical combination method so that a prize-winning probability of another user of a previous point in time affects a prize-winning probability of a user of a later point in time by a processing method of classifying users as a probability group selected by the user and performing prize-winning processing in real time.

33. The system of claim 18, wherein the price event processing server 60 automatically randomly extracts any one probability of a plurality of probabilities registered so that a sum of all the probabilities is 1, and provides the extracted probability to the user to calculate an amount of prize money of the user through prize-winning processing that "(sum of all promotion expenses of affiliate) × (probability provided to user) = amount of prize money".

34. The system of claim 18, wherein the participation amount of the user may be a fixed amount according to a promotion event of the affiliate or a variable amount when a user adds up an additional accumulated money of the user to promotion expenses.

35. The system of claim 33, wherein after a first participation amount is paid, when the user requests an additional probability in addition to the probability provided thereto, the price event processing server 60 performs prize-winning processing by receiving payment of an additional participation amount and applying the additional participation amount to the probability selected by the user among the plurality of probabilities.

36. The system of claim 33, wherein the price event processing server 60 receives payment of a participation amount of each round from the same user, generates different probabilities resulting from a sequential request for an additional probability, and then applies the participation amounts in a lump with respect to any one probability selected by the user.

37. The system of claim 33, wherein the price event processing server 60 randomly extracts and provides a plurality of probabilities by receiving a request for provision of a plurality of probabilities from the user, and performs prize-winning processing with respect to any one probability selected by the user among the plurality of probabilities.

38. The system of claim 33, wherein the (sum of all promotion expenses of affiliate) is calculated by the price event processing server 60 so that the (sum of all promotion expenses of affiliate) is changed every time the prize money of the user is provided.

39. The system of claim 18, wherein the price event processing server 60 comprises:
a communication module 62 configured to perform communication with the affiliate terminal 80 and the user terminal 2;
an affiliate information registration unit 64 configured to register location information and product (or service) information of the affiliate;
an affiliate-specific support amount registration unit 66 configured to register information on a promotion discount rate (or discount amount) of each affiliate to be provided to the user;
an affiliate information extractor 68 configured to extract affiliate information by a specific affiliate selection signal provided from the user terminal 2;
a price event processor 72 configured to perform processing for whether the user won or not and for an amount of prize money by forming a price group through affiliate classification or product classification and applying a prize-winning probability selected by the user; and
a controller 78 configured to control so that affiliate-specific or product-specific promotion discount rate information is registered, respectively, and a sum of the promotion discount rates is used as a financial resource, and the user selects a predetermined prize-winning probability in real time for processing whether the user won or not.

40. The system of claim 18, wherein the price event processing server 60 comprises: a temporary payment processor 70 configured to perform preprocessing of payment so that a promotion support amount is obtained before actual payment.

41. The system of claim 18, wherein the price event processing server 60 further comprises:
a payment relay unit 74 configured to relay a payment signal generated in the user terminal 2 to a payment server 82 and relay payment information to the user terminal 2; and
a payment authentication number generator 76 configured to generate and transmit a payment authentication number to the user terminal 2 and the affiliate terminal 80 when the payment is completed by the user to allow the affiliate so as to confirm which user makes the payment and for which product the payment is made.

42. The system of claim 18, wherein the price event processing server 60 performs processing so that different promotion support amounts are provided for different products of the same affiliate.

43. The system of claim 18, wherein the price event processing server 60 receives information on selection of a product or service to be purchased, determines how much promotion discount rate is matched to the product or service, and collects and stores information on the sale of the product or service.

44. The system of claim 39, wherein a product information input unit 44 comprises a function of performing an input of an ordered menu and a table number.

45. The system of claim 39, wherein the price event processor 72 comprises:
a price group classification processor 84 configured to primarily classify affiliates that provide the same promotion discount rate as a group;
an expected discount rate group classification processor 86 configured to secondarily classify users who select the same prize-winning probability as a group;
a probability generator 88 configured to calculate and generate a prize-winning probability according to an expected discount rate of the user;
a prize-wining processor 92 configured to perform prize-winning processing of the user and calculating an amount of prize money; and
a payment amount recalculator 94 configured to recalculate a final payment amount by subtracting the amount of prize money from a payment amount of the user.

46. The system of claim 39, wherein the price event processor 72 comprises a random number generator 90 configured to generate a random number to confirm whether the user won or not when the server randomly extracts and registers a prize-winning number for a preset number of prize-winners, and an event participation signal of the user is generated.

47. An apparatus for processing a price event comprising: with respect to a price event processing server 60 configured to perform processing for prize-winning of a discount event by receiving affiliate-specific support amount information or promotion discount rate and selecting and inputting a product of any one affiliate,
an affiliate information request signal generator 38 configured to automatically generate an affiliate information request signal when an application operating signal is generated;
an affiliate information receiver 40 configured to receive information on a plurality of affiliates from the price event processing server 60;
an affiliate selection unit 42 configured to select and input any one affiliate of the plurality of affiliates;
a product information input unit 44 configured to input a purchase signal for a product sold in the affiliate;
an expected discount rate selection unit 48 configured to input an expected discount rate desired to be provided for the product;
an information display unit 50 configured to display information received from the price event processing server 60 on a screen; and
a controller 56 configured to control so as to conduct a prize-winning event for a discount rate selected by a user through the price event processing server 60 at the time of payment for a specific product at a specific affiliate by interworking with the price event processing server 60, and output information on the prize-winning event.

48. The apparatus of claim 47, further comprising a GPS module 46 configured to automatically extract and transmit location information of the user to request information on an affiliate located within a certain radius around the user.

49. The apparatus of claim 47, further comprising: a payment signal generator 52 configured to generate a payment signal for a price of the product to be purchased; and
a payment authentication number receiver 54 configured to receive a payment authentication number provided from the price event processing server 60 and presented to the affiliate.

50. The apparatus of claim 49, wherein the payment signal generator 52 is configured to automatically transmit a payment completion signal to the price event processing server 60 when receiving a payment signal from a payment server 82.

51. The apparatus of claim 18, wherein the price event processing server 60 further comprises: a prize-winning probability information storage 106 configured to store a fixed probability calculated by using a financial resource paid by an owner of an affiliate and different variable probabilities calculated by using the financial resource paid by the owner of the affiliate.

52. The apparatus of claim 18, wherein the price event processing server 60 further comprises: an affiliate prize-winning probability classifier 102 configured to classify information on a financial resource provided by each affiliate or for each specific product, and affiliate selection information on whether to apply a fixed probability and a variable probability at the same time, or apply only a fixed probability, or apply only a variable probability.

53. The apparatus of claim 18, wherein the price event processing server 60 further comprises: a final prize-winning probability calculator 104 configured to calculate a final probability by adding up a fixed probability preset for each affiliate and a randomly extracted variable probability.

54. The apparatus of claim 52, wherein the affiliate prize-winning probability classifier 102 registers information indicating that a financial resource for performing a promotion event in which a predetermined discount rate is provided upon purchase of a product is divided into a fixed probability type financial resource and a variable probability type financial resource, and a divided ratio is changeable according to selection of an owner of the affiliate.
